# EUROPEAN PATENT SPECIFICATION

(11) **EP 2 400 159 B1**
(45) Date of publication and mention of the grant of the patent: **25.09.2013**
(21) Application number: 10167260.8
(22) Date of filing: 25.06.2010
(51) Int. Cl.: F04D 29/12, F16J 15/34

(54) **Sealing device for a pump**
Dichtungsvorrichtung für eine Pumpe
Dispositif de joint pour pompe

(43) Date of publication of application: 28.12.2011
(73) Proprietor: Walrus Pump Co., Ltd., Taipei Hsien (TW)
(72) Inventor: Huang, Shou-Hsiung, Taipei Hsien (TW)
(74) Representative: Lang, Christian

(56) References cited:
- WO-A2-2006/089289
- FR-A1- 2 429 360
- US-A1- 2006 061 041
- US-B1- 6 461 115

## Description

### 1. Field of the Invention

The present invention relates to a sealing device, and more particularly to a sealing device for a pump that is mounted on a shaft of a motor of a pump and effectively seals a water chamber of the pump to prevent leakage of the water chamber damaging the motor.

### 2. Description of Related Art

Pumps are generally mechanical devices and are used for pumping fluid such as water or air for transportation of such fluid from lower places to higher places.

A conventional pump comprises a housing, a motor and a seal.

The casing has a coupling chamber, a water chamber, an inlet hole and an outlet hole. The coupling chamber and the water chamber are defined in the casing and have a partition formed therebetween. The partition has a shaft hole defined therethrough and communicates with the coupling chamber and water chamber. The inlet and outlet holes are defined in the casing and communicate with the water chamber. The motor is mounted on the pump and has a coupling, a shaft and multiple turbine blades. The coupling is mounted rotatably on the motor and is located in the coupling chamber. The shaft is connected to the coupling, extends through the shaft hole and in the water chamber. The turbine blades are mounted on the shaft and are located in the water chamber. The seal is mounted in the shaft hole, supports the shaft and seals the water chamber to prevent water in the water chamber from leaking.

However, the seal serves as a bearing and has multiple components assembled together so that the seal cannot effectively seal the water chamber and leakage easily occurs between adjacent components.

US 2006/0061041 A1 discloses a shaft-sealing device having an inner modular structure for combining with a rotary machine. However, the spring of the shaft-sealing device is exposed out of the shaft tube and easily wears so that the sealing functions of the shaft-sealing device are insufficient.

US 6,461,115 B1, FR 2429360 and WO 2006/089289 A2 disclose other examples of a seal assembly for use in a pumping system.

To overcome the shortcomings, the present invention provides a sealing device for a pump to mitigate or obviate the aforementioned problems.

The main objective of the invention is to provide a sealing device for a pump that is mounted on a shaft of a motor of a pump and effectively seals a water chamber of the pump to prevent leakage of the water chamber damaging the motor.

A sealing device for a pump in accordance with the present invention has a sleeve, a rotary collar, a first O-ring, a stationary collar, a mounting bracket, a second O-ring, a mounting collar and a locking pin. The rotary collar, stationary collar, mounting bracket and mounting collar are mounted around the sleeve. The first O-ring is mounted between the sleeve and the rotary collar. The second O-ring is mounted between the mounting bracket and the stationary collar. The locking pin is mounted securely between the mounting bracket and the stationary collar. The O-rings provide multi-sealing functions. The locking pin prevents relative rotation between the mounting bracket and stationary collar.

Other objectives, advantages and novel features of the invention will become more apparent from the following detailed description when taken in conjunction with the accompanying drawings.

### IN THE DRAWINGS

Fig. 1 is a perspective view of a sealing device for a pump in accordance with the present invention;
Fig. 2 is an exploded top perspective view of the sealing device in Fig. 1;
Fig. 3 is an exploded bottom perspective view of the sealing device in Fig. 1;
Fig. 4 is a cross sectional side view of the sealing device in Fig. 1; and
Fig. 5 is a side view in partial section of the sealing device in Fig. 4 mounted in a pump.

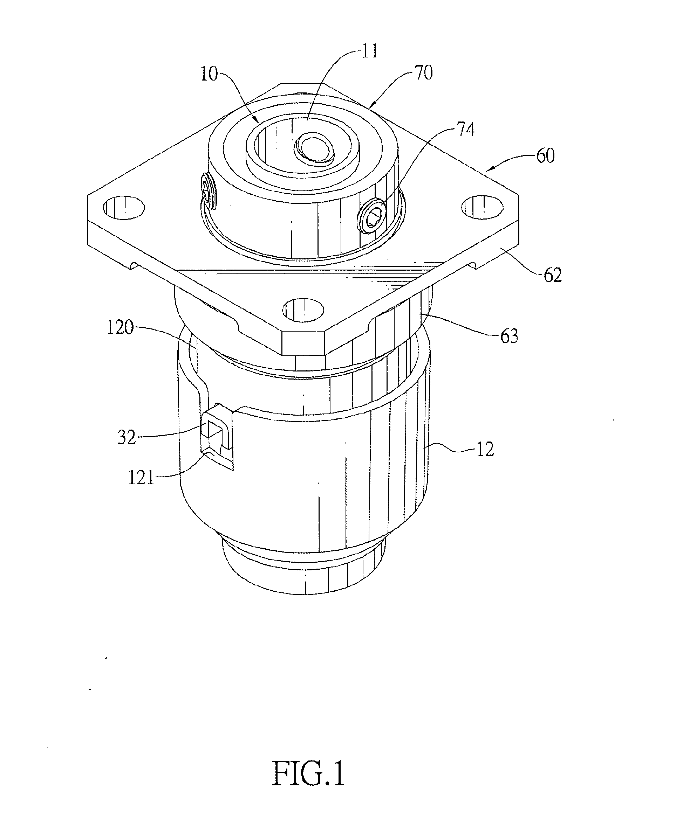

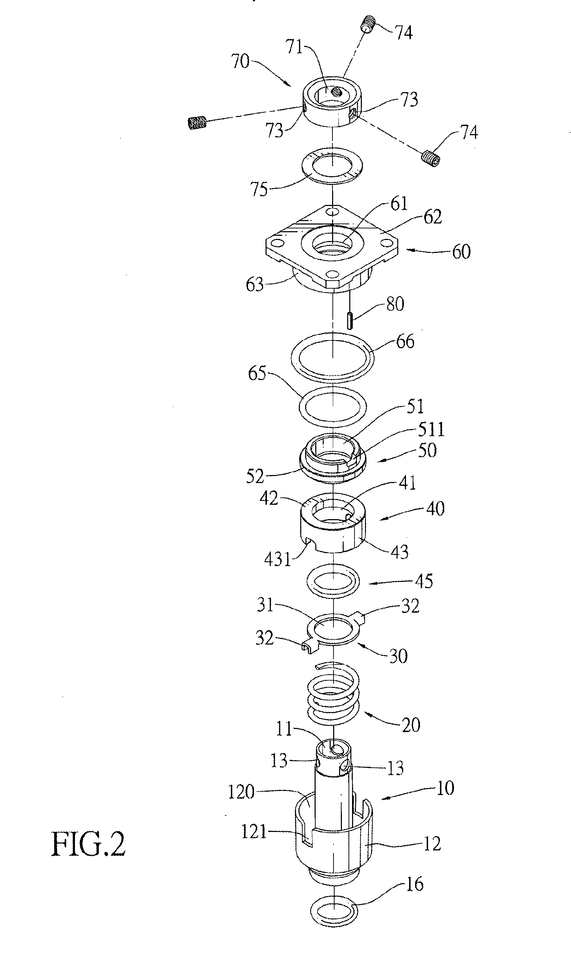

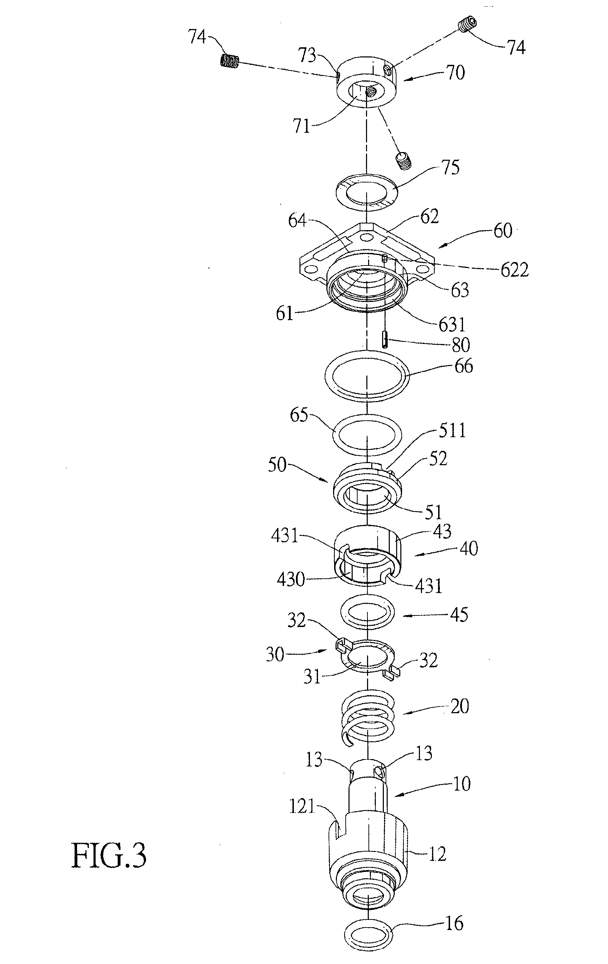

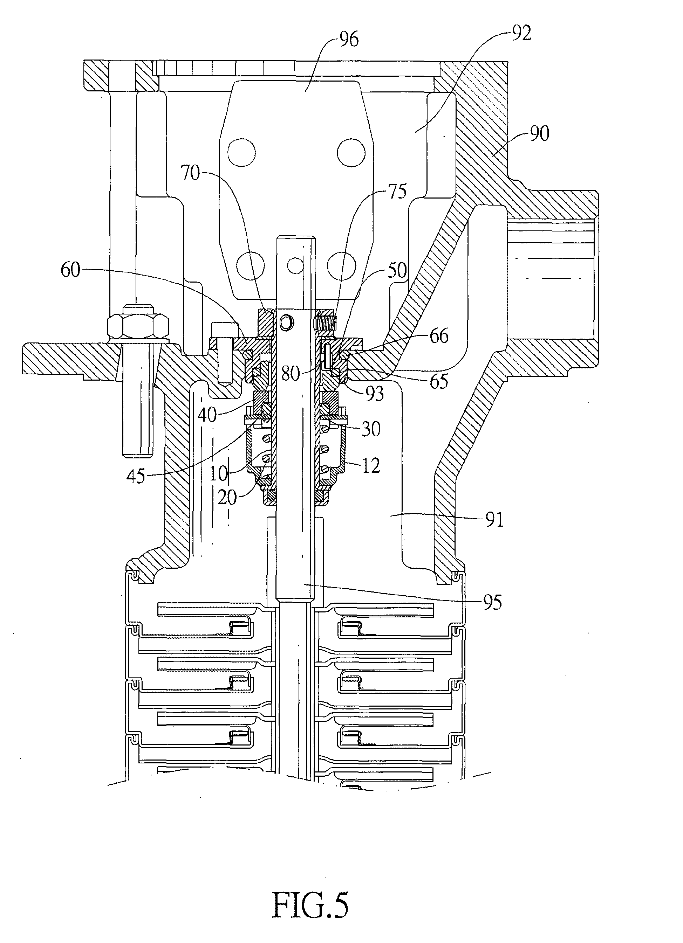

With reference to Figs. 1 to 3 and 5, a sealing device in accordance with the present invention is mounted in a pump. The pump has a housing 90, a shaft 95 and a coupling 96. The housing 90 has a water chamber 91, a coupling chamber 92, a partition and a shaft aperture 93. The water chamber 91 and the coupling chamber 92 are defined in the pump 90. The partition is formed between the water chamber 91 and the coupling chamber 92. The shaft hole is defined through the partition and communicates with the water chamber 91 and the coupling chamber 92. The shaft 95 is mounted rotatably through the shaft aperture 93 and extends in the water chamber 91 and has a connecting end. The coupling 96 is mounted on the connecting end of the shaft 95 and is connected to a motor.

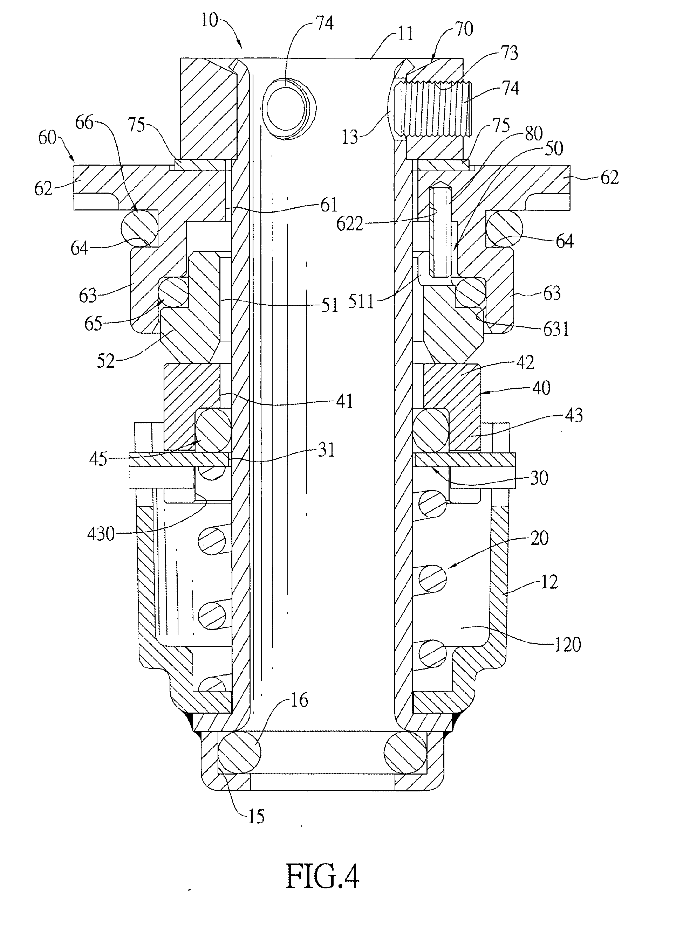

With further reference to Fig. 4, the sealing device comprises a sleeve 10, a rotary collar 40, an alignment collar 30, a spring 20, a first O-ring 45, a stationary collar 50, a mounting bracket 60, a second O-ring 65, a third O-ring 66, a mounting collar 70 and a locking pin 80.

The sleeve 10 has a top end, a bottom end, a shaft hole 11, an annular flange 12 and multiple transverse holes 13 and may further have a mounting slot 15 and a leakage-proof O-ring 16.

The top end of the sleeve 10 may be curved outward to block the other elements that are mounted around the sleeve 10, as shown in Fig. 4.

The shaft hole 11 is defined longitudinally through the sleeve 10, is mounted around the shaft 95 and has an inner surface.

The annular flange 12 is mounted securely around the sleeve 10, has a top edge and an annular slot 120 and further has multiple alignment notches 121. The annular slot 120 is defined between the sleeve 10 and the annular flange 12 and has an open top adjacent to the top edge of the annular flange 12. The alignment notches 121 are defined in the top edge of the annular flange 12.

The transverse holes 13 are defined transversely through the sleeve 10 near the top end.

The mounting slot 15 is defined radially in the inner surface of the shaft hole 11 near the bottom end.

The leakage-proof O-ring 16 may be resilient and is mounted in the mounting slot 15 and water-tightly contacts the shaft 95 to prevent water in the water chamber 91 from leaking.

The rotary collar 40 is mounted un-rotatably and slidably around the sleeve 10, has a bottom end and a mounting hole 41 and may further have a disk 42, an annular skirt 43, an assembling slot 430 and multiple positioning notches 431.

The mounting hole 41 is defined axially through the rotary collar 40, is mounted around the sleeve 10 and has an inner surface.

The disk 42 is formed on the rotary collar 40 around the mounting hole 41.

The annular skirt 43 is formed on and protrudes downward from the disk 42 and has a bottom edge and an assembling slot 430. The assembling slot 430 is defined radially in the inner surface of the mounting hole 41 and adjacent to the bottom end of the rotary collar 40.

The positioning notches 431 are defined in the bottom edge of the annular skirt 43.

The alignment collar 30 is mounted un-rotatably and slidably around the sleeve 10 and has a central hole 31 and multiple positioning protrusions 32.

The central hole 31 is defined axially through the alignment collar 30 and is mounted around the sleeve 10.

The positioning protrusions 32 are formed on and protrude radially outward from the alignment collar 30, are slidably mounted respectively in the alignment notches 121 of the sleeve 10 and are mounted respectively in the positioning notches 431 of the rotary collar 40. Therefore, the shaft 95, sleeve 10 and rotary collar 40 rotate synchronously on the housing 90 of the pump.

The spring 20 is mounted around the sleeve 10 in the annular slot 120 and has two ends respectively pressing against the annular flange 12 and the alignment collar 30.

The first O-ring 45 may be resilient, is mounted water-tightly between the sleeve 10 and the rotary collar 40 and may be mounted around the sleeve 10 in the assembling slot 430 of the rotary collar 40.

The stationary collar 50 is mounted rotatably on the sleeve 10 above the rotary collar 40, rotatably contacts the rotary collar 40, has a top end, a bottom end and a collar hole 51 and may further have a positioning flange 52 and a locking notch 511.

The collar hole 51 is defined axially through the stationary collar 50 and is mounted around the sleeve 10.

The positioning flange 52 is formed on and protrudes radially outward from the stationary collar 50.

The locking notch 511 is defined in the top end of the stationary collar 50.

The mounting bracket 60 is mounted rotatably around the sleeve 10 above the stationary collar 50, has a through hole 61 and may further have a mounting board 62 and a cylinder 63.

The through hole 61 is defined through the mounting bracket 60 and is mounted around the sleeve 10.

The mounting board 62 is formed on the mounting bracket 60 around the through hole 61, is mounted securely on the housing 90 of the pump and has a bottom surface and a pin hole 622. The pin hole 622 is defined in the bottom surface of the mounting board 62.

The cylinder 63 is formed on and protrudes downward from the mounting board 62 and has a bottom end, a recess 631 and an annular positioning groove 64. The recess 631 is defined in the bottom end, partially accommodates the stationary collar 50 and having an inner surface. The annular positioning groove 64 is defined radially in the cylinder 63.

The second O-ring 65 may be resilient, is mounted between the mounting bracket 70 and the stationary collar 50 and may be mounted around the stationary collar 50 and water-tightly abuts the recess 631 of the mounting bracket 60.

The third O-ring 66 may be resilient, is mounted around the cylinder 63 of the mounting bracket 60 in the annular positioning groove 64 and water-tightly abuts an inner surface of the shaft aperture 93 of the housing 90.

The mounting collar 70 is mounted detachably around the sleeve 10 above the mounting bracket 60 and blocks and prevents the rotary collar 40, stationary collar 50 and mounting bracket 60 from falling off. The mounting collar 70 has a fastening hole 71, multiple threaded holes 73, multiple bolts 74 and a washer 75.

The fastening hole 71 is defined axially through the mounting collar 70 and is mounted around the sleeve 10.

The threaded holes 73 are defined radially through the mounting collar 70 and are aligned respectively with the transverse holes 13 of the sleeve 10.

The bolts 74 are mounted respectively through the threaded holes 73 and respectively extend in the transverse holes 13 to mount the mounting collar 70 on the sleeve 10.

The washer 75 may be metal or rubber and is mounted around the sleeve 10 between the mounting collar 70 and the mounting bracket 60 to prevent rub therebetween.

The locking pin 80 is mounted securely between the stationary collar 50 and the mounting bracket 60 to prevent relative rotation between the stationary collar 50 and the mounting bracket and may have two ends. The ends of the locking pin 80 respectively extend in the locking notch 511 of the stationary collar 50 and the pin hole 622 of the mounting bracket 60.

The first O-ring 45, second O-ring 65, third O-rings 66 and leakage-proof O-ring 16 provide multiple sealing functions to effectively prevent water in the water chamber 91 from leaking through the sealing device. Furthermore, the locking pin 80 keeps the stationary collar 50 and mounting bracket 60 un-rotated on the housing 90 of the pump and stabilizes the rotation of the sleeve 10 and the rotary collar 40.

## Claims

1. A sealing device for a pump comprising a sleeve (10) and wherein:
the sleeve (10) has an outer surface, a top end and a bottom end and further having
a shaft hole (11) defined longitudinally through the sleeve (10) and having an inner surface; and
an annular flange (12) mounted around the outer surface of the sleeve (10) and having a top edge and an annular slot (120) defined between the sleeve (10) and the annular flange (12) and having an open top adjacent to the top edge of the annular flange (12);
a rotary collar (40) is mounted un-rotatably and slidably around the outer surface of the sleeve (10) and has a bottom end and a mounting hole (41) defined axially through the rotary collar (40) and having an inner surface;
a first O-ring (45) is mounted water-tightly between the sleeve (10) and the rotary collar (40);
a stationary collar (50) is mounted rotatably on the sleeve (10) above the rotary collar (40), rotatably contacts the rotary collar (40) and has a top end, a bottom end and a collar hole (51) defined axially through the stationary collar (50);
a mounting bracket (60) is mounted rotatably around the outer surface of the sleeve (10) above the stationary collar (50) and has a through hole (61) through the mounting bracket (60);
a second O-ring (65) is mounted between the mounting bracket (60) and the stationary collar (50);
a mounting collar (70) is mounted around the outer surface of the sleeve (10) above the mounting bracket (60) and prevents the rotary collar (40), stationary collar (50) and mounting bracket (60) from falling off; and
a locking pin (80) is mounted securely between the stationary collar (50) and the mounting bracket (60) to prevent relative rotation between the stationary collar (50) and the mounting bracket;
an alignment collar (30) is mounted un-rotatably and slidably around the outer surface of the sleeve (10) and has a central hole (31) defined axially through the alignment collar (30);
a spring (20) is mounted around the outer surface of the sleeve (10) in the annular slot (120) and has two ends respectively pressing against the annular flange (12) and the alignment collar (30);
wherein the sealing device is **characterized in that**
the annular flange (12) of the sleeve (10) further has multiple alignment notches (121) defined in the top edge of the annular flange (12); and the alignment collar (30) further has multiple positioning protrusions (32) formed on and protruding radially outward from the alignment collar (30), and slidably mounted respectively in the alignment notches (121) of the sleeve (10).

2. The sealing device as claimed in claim 1, wherein the mounting bracket (60) further has
a mounting board (62) formed on the mounting bracket (60) around the through hole (61); and
a cylinder (63) formed on and protruding downward from the mounting board (62) and having a bottom end and a recess (631) defined in the bottom end, partially accommodating the stationary collar (50) and having an inner surface.

3. The sealing device as claimed in claim 2, wherein
the rotary collar (40) further has
a disk (42) formed on the rotary collar (40) around the mounting hole (41);
an annular skirt (43) formed on and protruding downward from the disk (42) and having a bottom edge; and
an assembling slot (430) defined radially in the inner surface of the mounting hole (41) and adjacent to the bottom end of the rotary collar (40);
the first O-ring (45) is mounted around the outer surface of the sleeve (10) in the assembling slot (430) of the rotary collar (40).

4. The sealing device as claimed in claim 3, wherein
the stationary collar (50) further has a positioning flange (52) formed on and protruding radially outward from the stationary collar (50); and
the second O-ring (65) is mounted around the stationary collar (50) in the recess (631) of the mounting bracket (60) and water-tightly abuts the inner surface of the recess (631) of the mounting bracket (60).

5. The sealing device as claimed in claim 4, wherein
the sleeve (10) further has multiple transverse holes (13) defined transversely through the sleeve (10) near the top end;
the mounting collar (70) has
a fastening hole (71) defined axially through the mounting collar (70) and mounted around the sleeve (10);
multiple threaded holes (73) defined radially through the mounting collar (70) and aligned respectively with the transverse holes (13) of the sleeve (10); and
multiple bolts (74) mounted respectively through the threaded holes (73) and respectively extending in the transverse holes (13).

6. The sealing device as claimed in claim 5, wherein
the cylinder (63) of the mounting bracket (60) further has an annular positioning groove (64) defined radially in the cylinder (63); and
a third O-ring (66) is mounted around the cylinder (63) of the mounting bracket (60) in the annular positioning groove (64).

7. The sealing device as claimed in claim 6, wherein
the rotary collar (40) further has multiple positioning notches (431) defined in the bottom edge of the annular skirt (43); and
the positioning protrusions (32) of the alignment collar (30) are mounted respectively in the positioning notches (431) of the rotary collar (40).

8. The sealing device as claimed in claim 7, wherein a washer (75) is mounted around the sleeve (10) between the mounting collar (70) and the mounting bracket (60).

9. The sealing device as claimed in claim 7, wherein the sleeve (10) further has
a mounting slot (15) defined radially in the inner surface of the shaft hole (11) near the bottom end of the sleeve (10); and
a leakage-proof O-ring (16) mounted in the mounting slot (15).

10. The sealing device as claimed in claim 7, wherein
the stationary collar (50) further has a locking notch (511) defined in the top end of the stationary collar (50);
the mounting board (62) of the mounting bracket (60) has a bottom surface and a pin hole (622) defined in the bottom surface; and
the locking pin (80) has two ends respectively extending in the locking notch (511) of the stationary collar (50) and the pin hole (622) of the mounting bracket (60).

## Patentansprüche

1. Dichtungsvorrichtung für eine Pumpe, die eine Hülse (10) umfasst, wobei:
die Hülse (10) eine äußere Oberfläche, ein oberes Ende und ein unteres Ende aufweist und ferner umfasst:
ein Schaftloch (11), das in Längsrichtung durch die Hülse (10) vorgesehen ist und eine innere Oberfläche aufweist; und
einen ringförmigen Flansch (12), der um die äußere Oberfläche der Hülse (10) herum montiert ist und einen obere Rand und einen ringförmiger Schlitz (120) aufweist, der zwischen der Hülse (10) und den ringförmigen Flansch (12) definiert ist, sowie einen offenen oberen Bereich benachbart zu dem oberen Rand des ringförmigen Flansches aufweist;
wobei ein Drehkragen (40) nicht drehbar und gleitend um die äußere Oberfläche der Hülse (10) angeordnet ist und ein unteres Ende und eine Montageöffnung (41) aufweist, die axial durch den Drehkragen (40) vorgesehen ist und eine innere Oberfläche aufweist;
wobei ein erster O-Ring (45) wasserdicht zwischen der Hülse (10) und dem Drehkragen (40) angeordnet ist;
wobei ein stationärer Kragen (50) drehbar an der Hülse (10) oberhalb des Drehkragenes (40) angeordnet ist, drehbar den Drehkragen (40) kontaktiert und ein oberes Ende, ein unteres Ende und eine Kragenöffnung (51) aufweist, die axial durch den stationären Kragen (50) hindurch vorgesehen ist;
wobei eine Montagehalterung (60) drehbar um die äußere Oberfläche der Hülse (10) oberhalb des stationären Kragens (50) angeordnet ist und eine Durchgangsöffnung (61) durch die Montagehalterung (60) aufweist;
wobei ein zweiter O-Ring (65) zwischen der Montagehalterung (60) und dem stationären Kragen (50) angeordnet ist;
wobei ein Montagekragen (70) um die äußere Oberfläche der Hülse (10) oberhalb der Montagehalterung (60) angeordnet ist und den Drehkragen (40), den stationären Kragen (50) und die Montagehalterung (60) vom Herunterfallen abhält; und
wobei ein Arretierstift (80) sicher zwischen dem stationären Kragen (50) und der Montagehalterung (60) montiert ist, um relative Drehungen zwischen dem stationären Kragen (50) und der Montagehalterung zu verhindern;
wobei ein Ausrichtungskragen (30) nicht drehbar und gleitend um die äußere Oberfläche der Hülse (10) herum angeordnet ist und eine zentrale Öffnung (31) aufweist, die axial durch den Ausrichtungskragen (30) hindurch definiert ist:
wobei eine Feder (20) um die äußere Oberfläche der Hülse (10) herum in dem ringförmigen Schlitz (120) angeordnet ist und zwei Enden aufweist, die jeweils gegen den ringförmigen Flansch (12) und den Ausrichtungskragen (30) drücken;
wobei die Dichtungsvorrichtung **dadurch gekennzeichnet ist, dass**:
der ringförmige Flansch (12) der Hülse (10) ferner viele Ausrichtungsaussparungen (121) aufweist, die am oberen Rand des ringförmigen Flansches (12) vorgesehen sind, und wobei der Ausrichtungskragen (30) ferner viele Positioniervorsprünge (32) aufweist, die an dem Ausrichtungskragen (30) ausgebildet sind und von diesem radial nach außen hervorstehen und jeweils gleitend in den Ausrichtungsaussparungen (121) der Hülse (10) angeordnet sind.

2. Dichtungsvorrichtung nach Anspruch 1, bei der die Montagehalterung (60) ferner aufweist:
eine Montageplatte (62), die um die Durchgangsöffnung (61) herum an der Montagehalterung (60) ausgebildet ist; und
einen Zylinder (63), der an der Montageplatte (62) ausgebildet ist und sich von dieser nach unten erstreckt und der ein unteres Ende und eine Ausnehmung (631) aufweist, die in dem unteren Ende vorgesehen ist und die teilweise den stationären Kragen (50) aufnimmt und eine innere Oberfläche aufweist.

3. Dichtungsvorrichtung nach Anspruch 2, wobei der Drehkragen (40) ferner aufweist:
eine Scheibe (42), die um die Montageöffnung (41) herum an dem Drehkragen (40) ausgebildet ist;
eine ringförmige Schürze (43), die an der Scheibe (42) ausgebildet ist und sich von dieser nach unten erstreckt und die einen unteren Rand aufweist; und
einen Montageschlitz (430), der radial in der inneren Oberfläche der Montageöffnung (41) und benachbart zu dem unteren Ende des Drehkragenes (40) vorgesehen ist;
wobei der erste O-Ring (45) um die äußere Oberfläche der Hülse (10) herum in dem Montageschlitz (430) des Drehkragenes (40) angeordnet ist.

4. Dichtungsvorrichtung nach Anspruch 3, wobei
der stationäre Kragen (50) ferner einen Positionierflansch (52) aufweist, der auf dem stationären Kragen (50) ausgebildet ist und sich radial von diesem nach außen erstreckt; und
wobei der zweite O-Ring (65) um den stationären Kragen (50) herum in der Ausnehmung (631) der Montagehalterung (60) angeordnet ist und wasserdicht an der inneren Oberfläche der Ausnehmung (631) der Montagehalterung (60) anliegt.

5. Dichtungsvorrichtung nach Anspruch 4, wobei
die Hülse (10) ferner viele transversale Löcher (13) aufweist, die nahe dem oberen Ende quer durch die Hülse (10) verlaufend vorgesehen sind;
wobei der Montagekragen (70) aufweist:
eine Befestigungsöffnung (71), die axial durch den Montagekragen (70) hindurch vorgesehen ist und das um die Hülse (10) herum angeordnet ist;
viele Gewindelöcher (73), die radial durch den Montagekragen (70) hindurch vorgesehen sind und die jeweils entsprechend auf die transversalen Löcher (13) der Hülse (10) ausgerichtet sind; und
viele Bolzen (74), die jeweils entsprechend durch die Gewindelöcher (73) hindurch angeordnet sind und sich jeweils entsprechend in die transversalen Löcher (13) erstrecken.

6. Dichtungsvorrichtung nach Anspruch 5, wobei
der Zylinder (63) der Montagehalterung (60) ferner eine ringförmige Positioniernut (64) aufweist, die radial in dem Zylinder (63) vorgesehen ist; und wobei ein dritter O-Ring (66) um den Zylinder (63) der Montagehalterung (60) herum in der ringförmigen Positioniernut (64) angeordnet ist.

7. Dichtungsvorrichtung nach Anspruch 6, wobei
der umlaufende Kragen (40) ferner viele Positionieraussparungen (431) aufweist, die in dem unteren Rand der ringförmigen Schürze (43) vorgesehen sind; und
wobei die Positioniervorsprünge (32) des Ausrichtungskragenes (30) jeweils entsprechend in den Positionieraussparungen (431) des Drehkragenes (40) angeordnet sind.

8. Dichtungsvorrichtung nach Anspruch 7, wobei eine Unterlegscheibe (75) um die Hülse (10) herum und zwischen dem Montagekragen (70) und der Montagehalterung (60) angeordnet ist.

9. Dichtungsvorrichtung nach Anspruch 7, wobei die Hülse (10) ferner aufweist:
einen Montageschlitz (15), der radial in der inneren Oberfläche der Schaftöffnung (11) nahe dem unteren Ende der Hülse (10) vorgesehen ist; und
einen leckdichten O-Ring (16), der in dem Montageschlitz (15) angeordnet ist.

10. Dichtungsvorrichtung nach Anspruch 7, wobei
der stationären Kragen (50) ferner eine Verschlussaussparung (511) aufweist, die an dem oberen Ende des stationären Kragens (50) vorgesehen ist;
wobei die Montageplatte (62) der Montagehalterung (60) eine untere Oberfläche und ein Stiftloch (622) aufweist, das an der unteren Oberfläche vorgesehen ist; und
wobei der Arretierstift (80) zwei Enden aufweist, die sich jeweils in die Verschlussaussparung (511) des stationären Kragens (50) und das Stiftloch (622) der Montagehalterung (60) erstrecken.

## Revendications

1. Dispositif de scellement pour une pompe comprenant un manchon (10) et dans lequel :
le manchon (10) a une surface extérieure, une extrémité de dessus et une extrémité de fond et a de plus
un trou de tige (11) défini longitudinalement à travers le manchon (10) et ayant une surface intérieure et
une bride annulaire (12) montée autour de la surface extérieure du manchon (10) et ayant un bord de dessus et une fente annulaire (120) définie entre le manchon (10) et la bride annulaire (12) et ayant un dessus ouvert adjacent au bord de dessus de la bride annulaire (12) ;
une bague rotative (40) est montée non rotative et coulissante autour de la surface extérieure du manchon (10) et a une extrémité de fond et un trou de montage (41) défini axialement à travers la bague rotative (40) et ayant une surface intérieure ;
un premier joint torique (45) est monté étanche à l'eau entre le manchon (10) et la bague rotative (40),
une bague stationnaire (50) est montée rotative sur le manchon (10) au-dessus de la bague (40), est en contact rotatif avec la bague rotative (40) et a une extrémité de dessus, une extrémité de fond et un trou de bague (51) défini axialement à travers la bague stationnaire (50) ;
une attache de montage (60) est montée rotative autour de la surface extérieure du manchon (10) au-dessus de la bague stationnaire (50) et a un trou traversant (61) à travers l'attache de montage (60) ;
un second joint torique (65) est monté entre l'attache de montage (60) et la bague stationnaire (50) ;
une bague de montage (70) est montée autour de la surface extérieure du manchon (10) au-dessus de l'attache de montage (60) et empêche la bague rotative (40), la bague stationnaire (50) et l'attache de montage (60) de tomber et
un goujon de blocage (80) est monté de manière solide entre la bague stationnaire (50) et l'attache de montage (60) pour empêcher la rotation relative entre la bague stationnaire (50) et l'attache de montage ;
une bague d'alignement (30) est montée non rotative et coulissante autour de la surface extérieure du manchon (10) et a un trou central (31) défini axialement à travers la bague d'alignement (30) ;
un ressort (20) est monté autour de la surface extérieure du manchon (10) dans la fente annulaire (120) et a deux extrémités qui se pressent respectivement contre la bride annulaire (12) et la bague d'alignement (30),
le dispositif d'étanchéité étant **caractérisé en ce que** la bride annulaire (12) du manchon (10) a de plus des encoches d'alignement (121) définies dans le bord de dessus de la bride annulaire (12) et la bague d'alignement (30) a de plus des saillies de positionnement (32) formées sur et faisant saillie radialement vers l'extérieur de la bague d'alignement (30) et montées coulissantes respectivement dans les encoches d'alignement (121) du manchon (10).

2. Dispositif d'étanchéité selon la revendication 1 dans lequel l'attache de montage (60) a de plus
une plaque de montage (62) formée sur l'attache de montage (60) autour du trou traversant (61) et
un cylindre (63) formé sur et faisant saillie vers le bas à partir de la plaque de montage (62) et ayant une extrémité de fond et un évidement (631) défini dans l'extrémité de fond, logeant partiellement la bague stationnaire (50) et ayant une surface intérieure.

3. Dispositif d'étanchéité selon la revendication 1 dans lequel la bague rotative (40) a de plus
un disque (42) formé sur la bague rotative (40) autour du trou de montage (41) ;
une collerette annulaire (43) formée sur et faisant saillie vers le bas à partir du disque (42) et ayant un bord de fond et
une fente d'assemblage (430) définie radialement dans la surface intérieure du trou de montage (41) et adjacente à l'extrémité de fond de la bague rotative (40) ;
le premier joint torique (45) est monté autour de la surface extérieure du manchon (10) dans la fente d'assemblage (430) de la bague rotative (40).

4. Dispositif d'étanchéité selon la revendication 3 dans lequel
la bague stationnaire (50) a de plus une bride de positionnement (52) formée sur et faisant saillie radialement vers l'extérieur à partir de la bague stationnaire (50) et
le second joint torique (65) est monté autour de la bague stationnaire (50) dans l'évidement (631) de l'attache de montage (60) et bute en étant imperméable à l'eau contre la surface intérieure de l'évidement (631) de l'attache de montage (60).

5. Dispositif d'étanchéité selon la revendication 4 dans lequel
le manchon (10) a de plus de multiples trous transversaux (13) définis transversalement à travers le manchon (10) près de l'extrémité de dessus ; la bague de montage (70) a
un trou de fixation (71) défini axialement à travers la bague de montage (70) et monté autour du manchon (10) ;
des trous filetés multiples (73) définis radialement à travers la bague de montage (70) et alignés respectivement avec les trous transversaux (13) du manchon (10) ;
des boulons multiples (74) montés respectivement à travers les trous filetés (73) et s'étendant respectivement dans les trous transversaux (13).

6. Dispositif d'étanchéité selon la revendication 5 dans lequel
le cylindre (63) de l'attache de montage (60) a de plus une rainure de positionnement annulaire (64) définie radialement dans le cylindre et
un troisième joint torique (66) est monté autour du cylindre (63) de l'attache de montage (60) dans la rainure de positionnement annulaire (64).

7. Dispositif d'étanchéité selon la revendication 6 dans lequel
la bague rotative (40) a de plus de multiples encoches de positionnement (431) définies dans le bord de fond de la collerette annulaire (43) et
les saillies de positionnement (32) de la bague d'alignement (30) sont montées respectivement dans les encoches de positionnement (431) de la bague rotative (40).

8. Dispositif d'étanchéité selon la revendication 7 dans lequel un joint d'étanchéité (75) est monté autour du manchon (10) entre la bague de montage (70) et l'attache de montage (60).

9. Dispositif d'étanchéité selon la revendication 7 dans lequel le manchon (10) a de plus
une fente de montage (15) définie radialement dans la surface intérieure du trou de tige (11) près de l'extrémité de fond du manchon (10) et
un joint torique étanche aux fuites (16) monté dans la fente de montage (15).

10. Dispositif d'étanchéité selon la revendication 7 dans lequel
la bague stationnaire (50) a de plus une encoche de blocage (511) définie dans l'extrémité de dessus de la bague stationnaire (50) ;
la plaque de montage (62) de l'attache de montage (60) a une surface de fond et un trou de goujon (662) défini dans la surface de fond et
le goujon de blocage (80) a deux extrémités qui s'étendent respectivement dans l'encoche de blocage (511) de la bague stationnaire (50) et le trou de goujon (622) de l'attache de montage (60).
